# EUROPEAN PATENT APPLICATION

(11) **EP 4 224 686 A1**
(43) Date of publication of application: **09.08.2023**
(21) Application number: 20966035.6
(22) Date of filing: 25.12.2020
(51) Int. Cl.: H02K 15/03

(54) **ROTOR MANUFACTURING METHOD**

(30) Priority: 18.12.2020 JP 2020210584
(71) Applicant: AISIN CORPORATION, Kariya-shi, Aichi 448-8650 (JP)
(72) Inventor: WAKUTA,Satoru, Kariya-shi, Aichi 448-8650 (JP); FURUTA,Yasunari, Kariya-shi, Aichi 448-8650 (JP); SABURI,Toshiyuki, Kariya-shi, Aichi 448-8650 (JP)
(74) Representative: Kramer Barske Schmidtchen Patentanwälte PartG mbB
(86) International application number: PCT/JP2020/049005
(87) International publication number: WO 2022/130649

(57) **Abstract**

A rotor manufacturing method includes: a jig attachment step (S3) of attaching a holding jig to a rotor core, the holding jig being a member that holds the rotor core by sandwiching the rotor core in a stacking direction of laminated steel sheets and pressing the rotor core; a rotor hub insertion step (S9) of inserting a rotor hub into an inner peripheral surface of the rotor core with the rotor core and the holding jig heated to a temperature equal to or higher than an insertable temperature at which the rotor hub can be inserted into the inner peripheral surface of the rotor core; and a cooling step (S 10) of cooling the rotor core to fix the rotor core and the rotor hub together. The rotor hub insertion step (S9) is performed with the holding jig kept attached to the rotor core.

## Description

### TECHNICAL FIELD

The present technique relates to rotor manufacturing methods for manufacturing a rotor of a rotating electrical machine.

### BACKGROUND ART

An interior permanent magnet (IPM) motor is typically used as a rotating electrical machine mounted on a vehicle such as, for example, a hybrid electric vehicle or a battery electric vehicle. When manufacturing a rotor of such a rotating electrical machine, a rotor core (laminated core) is formed by stacking laminated steel sheets having holes, magnets are inserted into the holes, and the rotor core is pre-heated. A thermosetting resin is then injected into the holes of the rotor core. The rotor core is then heated to fix the magnets in the rotor core.

A transmission member that transmits rotation of a shaft etc. needs to be fixed inside the rotor core. So-called shrink fitting is used as a fixing method. In the shrink fitting, the rotor core is heated so that the rotor core has an increased inner diameter. In this state, the transmission member is inserted and then cooled to shrink, so that the rotor core and the transmission member are fastened together. When performing such shrink fitting, it is necessary to heat the rotor core. As described above, it is also necessary to heat the rotor core in order to cure the resin. Therefore, a method is proposed in which such fixing of the magnets and shrink fitting are performed simultaneously or are performed with a time lag before the rotor cools by using the heat obtained by the heating (see Patent Document 1).

### Related Art Documents

### Patent Documents

[Patent Document 1] Japanese Patent No. 5746873

### SUMMARY OF THE INVENTION

### Problem to be Solved by the Invention

When shrink-fitting the transmission member inside the rotor core, the transmission member is inserted into the heated rotor core. However, if there is a large gap between the inner peripheral surface of the rotor core and the outer peripheral surface of the transmission member, the fastening force between the rotor core and the transmission member in a cooled state is reduced, and therefore the transfer torque capacity, that is, the amount of torque that can be transmitted, is reduced. It is therefore preferable to design the rotor core and the transmission member so as to minimize a gap between the inner peripheral surface of the rotor core and the outer peripheral surface of the transmission member in a heated state. However, when the cooled transmission member comes into contact with the inner peripheral surface of the rotor core, the heat of the contact portion of the rotor core is absorbed by the transmission member so that the rotor core is partially cooled. As a result, the inner peripheral surface of the rotor core shrinks in a distorted state, causing distortion of the rotor core. It is therefore difficult to insert the transmission member into the rotor core, which hinders an improvement in productivity.

It is therefore an object of the present invention to provide a rotor manufacturing method capable of improving productivity by facilitating insertion of a transmission member into a hollow portion of a rotor core.

### Means for Solving the Problem

One aspect of the present disclosure is
a rotor manufacturing method for manufacturing a rotor of a rotating electrical machine, the rotor manufacturing method including:
a jig attachment step of attaching a holding jig to a rotor core formed by laminated steel sheets, the holding jig being a member that holds the rotor core by sandwiching the rotor core in a stacking direction of the laminated steel sheets and pressing the rotor core;
a transmission member insertion step of inserting a transmission member into an inner peripheral surface of the rotor core with the rotor core and the holding jig heated to a temperature equal to or higher than an insertable temperature at which the transmission member can be inserted into the inner peripheral surface of the rotor core, the transmission member being a member that transmits rotation; and
a cooling step of cooling the rotor core to fix the rotor core and the transmission member together.

The transmission member insertion step is performed with the holding jig kept attached to the rotor core.

As described above, the transmission member insertion step is performed with the rotor core and the holding jig heated to a temperature equal to or higher than the insertable temperature at which the transmission member can be inserted into the inner peripheral surface of the rotor core, and with the holding jig kept attached to the rotor core. Therefore, when the transmission member is inserted into the rotor core, the rotor core is less likely to cool due to the amount of heat of the holding jig. Moreover, since the rotor core is pressed by the holding jig, distortion of the rotor core can be reduced. Productivity can thus be improved.

### BRIEF DESCRIPTION OF THE DRAWINGS

[FIG. 1] FIG. 1 is a flowchart showing steps of a rotor manufacturing method according to a first embodiment.
[FIG. 2] FIG. 2 is a perspective view of a rotor core.
[FIG. 3] FIG. 3 is a sectional view of the rotor core and a holding jig.
[FIG. 4] FIG. 4 is a top view showing the positional relationship between an upper plate of the holding jig and the rotor core.
[FIG. 5] FIG. 5 is a top view showing the positional relationship between a lower plate of the holding jig and the rotor core.
[FIG. 6] FIG. 6 is a sectional view showing the state in which an injector is separated from a rotor placement portion in an injection device.
[FIG. 7] FIG. 7 is a sectional view showing the state in which an injection nozzle is attached to the rotor placement portion in the injection device.
[FIG. 8] FIG. 8 is a sectional view showing the state in which the rotor core is placed on the rotor placement portion in the injection device.
[FIG. 9] FIG. 9 is a sectional view showing the state in which the injection device injects a resin into the rotor core.
[FIG. 10] FIG. 10 is a sectional view showing the state in which the rotor core into which the resin had been injected by the injection device has been removed from the rotor placement portion.
[FIG. 11] FIG. 11 is a sectional view showing the injector in the injection device.
[FIG. 12A] FIG. 12A is a top view showing the injection nozzle.
[FIG. 12B] FIG. 12B is a sectional view showing the injection nozzle.
[FIG. 12C] FIG. 12C is a top view showing the positional relationship between the rotor core and the injection nozzle.
[FIG. 13] FIG. 13 is a sectional view showing the state in which the rotor core with the holding jig attached thereto is held by a transfer robot.
[FIG. 14] FIG. 14 is a sectional view showing the state in which the rotor core with the holding jig attached thereto is being transferred by the transfer robot.
[FIG. 15] FIG. 15 is a sectional view showing the state in which the rotor core with the holding jig attached thereto is placed on a shrink fit device.
[FIG. 16] FIG. 16 is a sectional view showing the state in which a rotor hub is inserted into the rotor core with the holding jig attached thereto.
[FIG. 17] FIG. 17 is a time chart showing changes in temperature of the rotor core and temperature of the resin in each step according to the first embodiment.
[FIG. 18] FIG. 18 is a time chart showing changes in temperature of the rotor core and temperature of the resin in each step according to a second embodiment.

### MODES FOR CARRYING OUT THE INVENTION

### <First Embodiment>

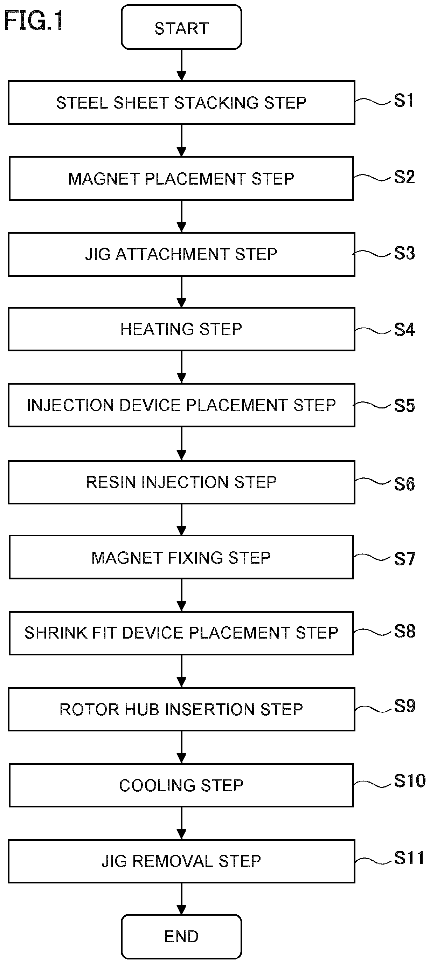

A first embodiment will be described below with reference to FIGS. 1 to 17.

### [Schematic Structure of Rotor]

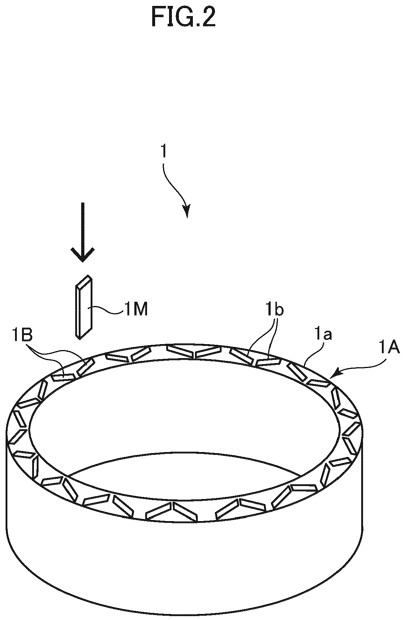

First, the structure of a rotor in, for example, a drive motor (rotating electrical machine) of a hybrid drive system or a battery electric vehicle will be briefly described. The drive motor roughly includes a stator (stationary element) and a rotor 1 (rotary element). As shown in FIG. 2, the rotor 1 includes a rotor core 1A formed by stacking laminated steel sheets 1a each having a plurality of holes 1b formed by press work etc. The rotor core 1A has a plurality of hole portions 1B formed by stacking the laminated steel sheets 1a in a stacking direction such that the holes 1b are in phase. Magnets 1M that are magnet members are inserted and placed in the hole portions 1B. In this state, the magnets 1M are fixed in the hole portions 1B with a resin. The magnets 1M are thus embedded in the rotor core 1A. A rotor hub 1H to which, for example, an engine, a speed change mechanism, etc. are drivingly connected is inserted into and fixed to the rotor core 1A. The rotor 1 of the rotating electrical machine is thus formed. In the present embodiment, a clutch for connecting and disconnecting power transmission between the engine and the rotating electrical machine or a clutch for connecting and disconnecting power transmission between the rotating electrical machine and the speed change mechanism are disposed inside the rotor hub 1H. That is, the rotating electrical machine as described herein is a rotating electrical machine having a large diameter.

### [Outline of Rotor Manufacturing Method]

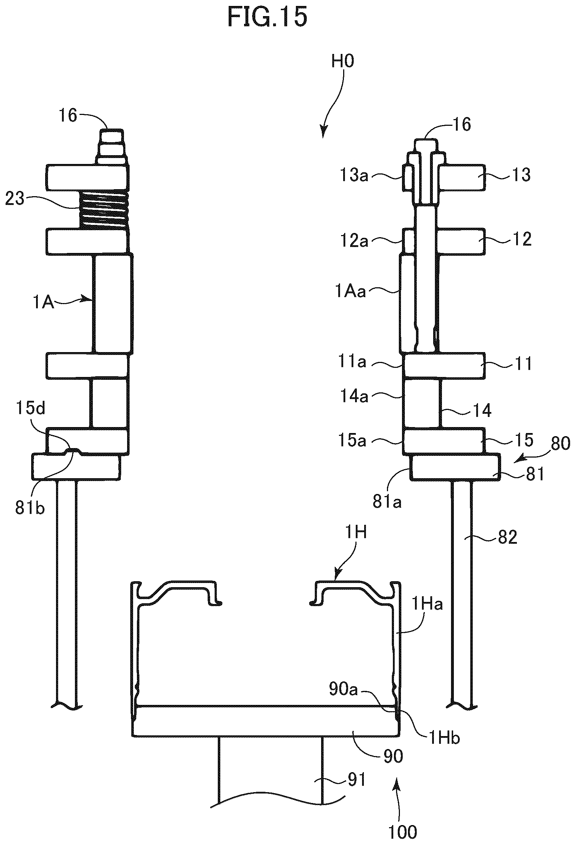

Next, an outline of a rotor manufacturing method according to the first embodiment will be provided. As shown in FIG. 1, the rotor manufacturing method includes: a steel sheet stacking step S 1 of stacking the laminated steel sheets 1a to form the rotor core 1A; a magnet placement step S2 of inserting and placing the magnets 1M in the hole portions 1B of the rotor core 1A; and a jig attachment step S3 of attaching a holding jig 10 to the rotor core 1A. The rotor manufacturing method further includes: a heating step S4 of heating the rotor core 1A; an injection device placement step S5 of placing the rotor core 1A in a resin injection device 30 for injecting a resin; and a resin injection step S6 of injecting the resin into the hole portions 1B of the rotor core 1A by the resin injection device 30. The rotor manufacturing method further includes: a magnet fixing step S7 that is a resin curing step of curing the injected resin to fix the magnets 1M in the rotor core 1A; a shrink fit device placement step S8 that is a moving step of moving the rotor hub and the rotor core 1A and placing the rotor hub and the rotor core 1A in a shrink fit device for shrink fitting the rotor hub 1H (see FIG. 15) that is a transmission member for transmitting rotation and the rotor core 1A; a rotor hub insertion step S9 that is a transmission member insertion step of inserting the rotor hub 1H into the rotor core 1A; a cooling step S 10 of cooling the rotor core 1A; and a jig removal step S 11 of removing the holding jig 10 from the rotor core 1A.

These steps are sequentially performed on a factory line while moving the rotor core 1A by, for example, a belt conveyor or a robot device. When stacking the laminated steel sheets 1a in the steel sheet stacking step S1 that will be described later, an operator performs adjustment. In the other steps, however, transfer of the rotor core 1A, attachment and detachment of the holding jig 10, etc. are performed by factory equipment such as articulated robots or transfer robot devices. In the first embodiment, the location where the resin injection device 30 for performing the resin injection step S6 is installed (first location on the production line) and the location where a shrink fit device 100 for performing the rotor hub insertion step S9 is installed (second location on the production line) are different. However, since these steps are continuously performed, these locations are preferably adjacent to each other.

### [Details of Steel Sheet Stacking Step]

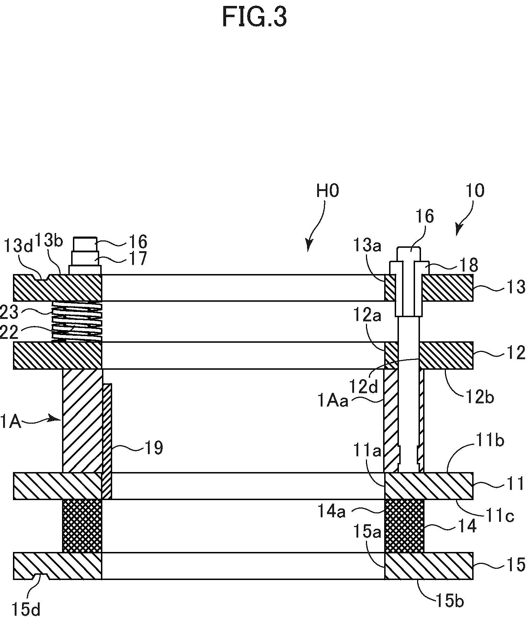

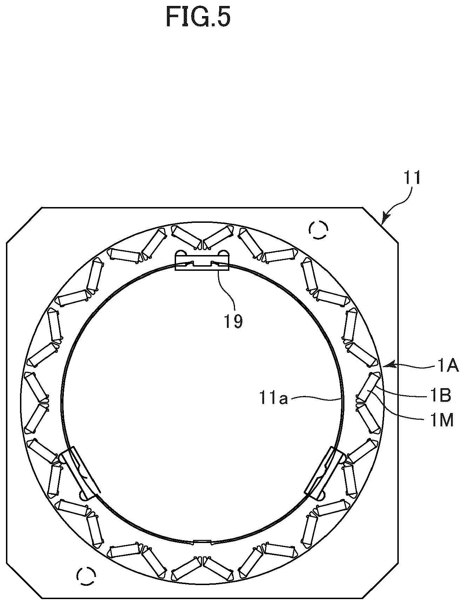

First, the steel sheet stacking step S 1 will be described in detail with reference to FIGS. 2 to 5. As shown in FIG. 2, the rotor core 1A is formed by stacking the laminated steel sheets 1a, each formed by, for example, press work etc. so as to have the shape of a hollow disc that is symmetrical about its center and each having the plurality of holes 1b, on an upper surface 11b of a lower plate 11 of the holding jig 10 that will be described in detail later, as shown in FIGS. 3 and 5. The laminated steel sheets 1a have a slight tolerance. Therefore, the operator stacks the laminated steel sheets 1a while performing phase adjustment in a circumferential direction of the hollow disc shape. The laminated steel sheets 1a are thus stacked so that the uppermost laminated steel sheet 1a is less tilted with respect to a plane orthogonal to the stacking direction (that is, a horizontal direction). The laminated steel sheets 1a may be stacked on the upper surface 11b of the lower plate 11 of the holding jig 10 as described above, or may be stacked at a different place to form the rotor core 1A and then placed on the upper surface 11b of the lower plate 11 of the holding jig 10.

As shown in FIGS. 3 and 5, the lower plate 11 of the holding jig 10 is a member having the shape of a hollow plate with a hole 11a in the center. Support plates 19 for positioning and supporting the rotor core 1A are fixed at, for example, three positions in the hole 11a. For example, shafts 16 are provided at, for example, four positions so as to stand on the lower plate 11. An annular heat insulating member 14 with a hole 14a in the center is fixed to a lower surface 11c of the lower plate 11, and a placement plate 15 having the shape of a hollow plate with a hole 11a in the center is fixed under the heat insulating member 14. That is, the lower plate 11, the heat insulating member 14, and the placement plate 15 are integrally fixed together. As will be described in detail later, a lower surface 15b of the placement plate 15 has recesses 15d that serve as positioning portions for positioning when the holding jig 10 is placed on a placement base 55 of the resin injection device 30 or a lifting device 80 of the shrink fit device 100.

When the rotor core 1A is placed on the upper surface 11b of the lower plate 11, the support plates 19 contact part of the inner peripheral surface of the rotor core 1A, so that horizontal movement of the rotor core 1A is restricted. The rotor core 1A is thus positioned relative to the lower plate 11 and supported on the lower plate 11. The lower plate 11 has a plurality of air holes, not shown. The air holes are formed so as to extend through the lower plate 11 at such positions that the air holes are aligned with the hole portions 1B in the stacking direction when the rotor core 1A is placed on the lower plate 11, and serve as vent holes during resin injection that will be described later.

### [Details of Magnet Placement Step]

Next, the magnet placement step S2 will be described in detail with reference to FIG. 2. As shown in FIG. 2, the rotor core 1A placed on, for example, the lower plate 11 of the holding jig 10 has the plurality of hole portions 1B formed by the holes 1b of the stack of the laminated steel sheets 1a. The magnets 1M are inserted and placed in the hole portions 1B.

### [Details of Jig Attachment Step]

Next, the jig attachment step S3 will be described in detail with reference to FIGS. 3 to 5. First, the structure of the holding jig 10 will be described.

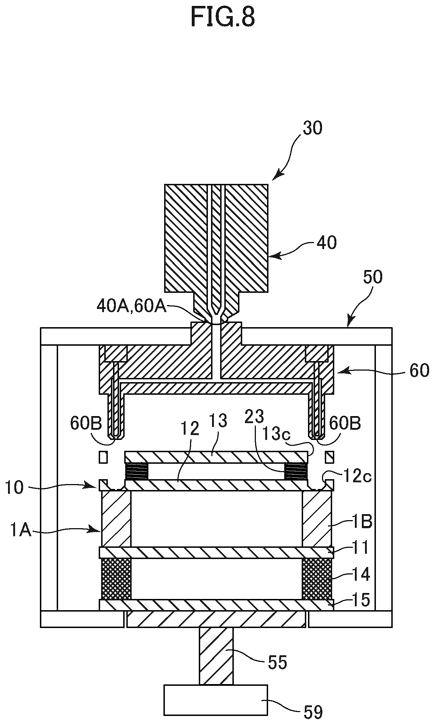

As shown in FIG. 3, the holding jig 10 roughly includes: the lower plate 11 that is a first plate located on one side of the rotor core 1A in the stacking direction of the laminated steel sheets 1a; a pressing plate 12; and an upper plate 13 that is a second plate located on the other side of the rotor core 1A. The lower plate 11, the pressing plate 12, and the upper plate 13 are arranged in the vertical direction so as to be substantially parallel. The rotor core 1A is placed on the upper surface 11b of the lower plate 11 as described above, and the pressing plate 12 is placed on top of the rotor core 1A so that a lower surface 12b of the pressing plate 12 contacts the rotor core 1A. The pressing plate 12 is a member in the shape of a hollow plate with a hole 12a in the center. As will be detailed later, a plurality of injection holes 12c (see FIG. 8) that is resin injection holes for injecting a resin is formed so as to extend through the pressing plate 12 and so as to be located above the hole portions 1B of the rotor core 1A. The pressing plate 12 has a plurality of through holes 12d through which the shafts 16 described above can pass.

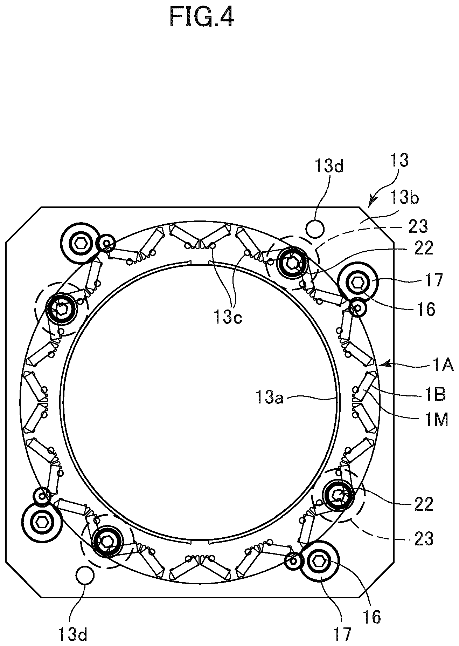

As shown in FIGS. 3 and 4, the upper plate 13 is a member in the shape of a hollow plate with a hole 13a in the center. The upper plate 13 is positioned in the vertical direction by inserting wedge members 18 around the shafts 16, and is fastened to the shafts 16 by nuts 17. Springs 23 are placed in a compressed state around support shafts 22 between the pressing plate 12 and the upper plate 13. The support shafts are screwed into and fixed to the upper plate 13 to position and support the springs 23. In the holding jig 10 structured as described above, the rotor core 1A is sandwiched between the lower plate 11 and the upper plate 13. The springs 23 that generate a pressing force in the stacking direction press the rotor core 1A via the pressing plate 12, so that the rotor core 1A is held between the springs 23 and the pressing plate 12. The plurality of laminated steel sheets 1a of the rotor core 1A is thus pressed in the stacking direction and held in contact with each other with as small a gap as possible in the stacking direction.

When attaching the holding jig 10 structured as described above to the rotor core 1A in the jig attachment step S3, the rotor core 1A is placed (laminated steel sheets 1a are disposed) on the upper surface 11b of the lower plate 11, the pressing plate 12 is placed on top of the rotor core 1A such that the shafts 16 pass through the pressing plate 12, the upper plate 13 is placed with the springs 23 interposed between the upper plate 13 and the pressing plate 12, and the nuts 17 are fastened so that the upper plate 13 is retained on the shafts 16. The holding jig 10 that presses and holds the rotor core 1A in the stacking direction is attached to the rotor core 1A such that the lower plate 11 and the pressing plate 12 are in surface contact with the laminated steel sheets 1a located at both ends in the stacking direction (vertical direction) and the laminated steel sheets 1a including portions around the hole portions 1B, and except the hole portions 1B, are pressed together.

### [Details of Heating Step]

Next, the heating step S4 will be described in detail. In the present embodiment, the resin for fixing the magnets 1M in the hole portions 1B of the rotor core 1A is, for example, a thermosetting resin material that has a melting start temperature of 60°C a curing start temperature of 110°C and a glass transition start temperature of 200°Cand that is solid at room temperature. When the temperature of the rotor core 1A is lower than the melting start temperature, the resin may be solidified during resin injection in the resin injection step S6 that will be described later. As a result, the hole portions 1B may not be sufficiently filled with the resin. Therefore, the temperature of the rotor core 1A needs to be equal to or higher than the melting start temperature at the time of the resin injection. In the present embodiment, as will be described later, when the resin is injected into the hole portions 1B, the resin may leak from small gaps between the laminated steel sheets 1a. By controlling the temperature of the rotor core 1A to a temperature equal to or higher than the curing start temperature at the time of the resin injection, the resin starts to cure from the portions that comes into contact with the hole portions 1B. The resin can thus be prevented from leaking from between the laminated steel sheets 1a.

Based on the above circumstances, in the heating step S4, the rotor core 1A held by the holding jig 10 (with the holding jig 10 attached thereto) is placed together with the holding jig 10 into a heating device such as, for example, a high-frequency heater located outside the resin injection device 30, and is heated to a temperature equal to or higher than the curing start temperature of the resin. In the first embodiment, the rotor core 1A is heated to, for example, about 140°Cin the heating step S4.

### [Details of Injection Device Placement Step]

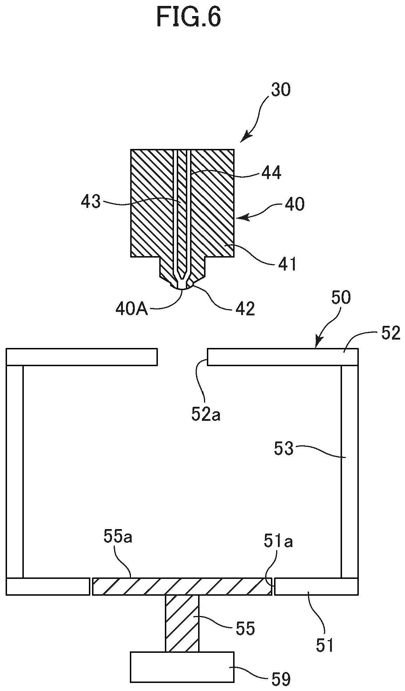

Next, the injection device placement step S5 of placing the rotor core 1A held by the holding jig 10 into the resin injection device 30 for injecting the resin will be described with reference to FIGS. 6, 7, 8, 9, 10, 11, 12A, 12B, and 12C. First, the structure of the resin injection device 30 will be described.

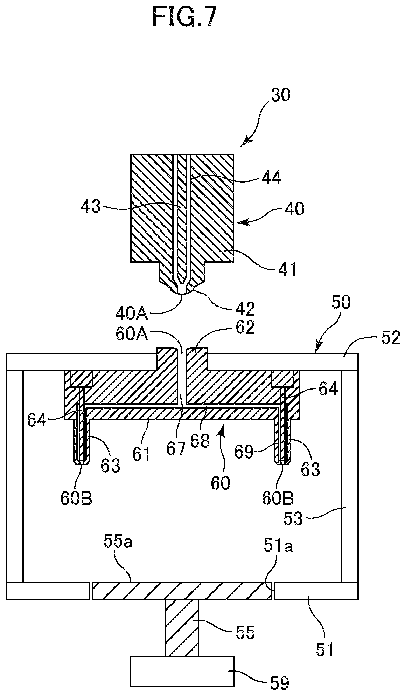

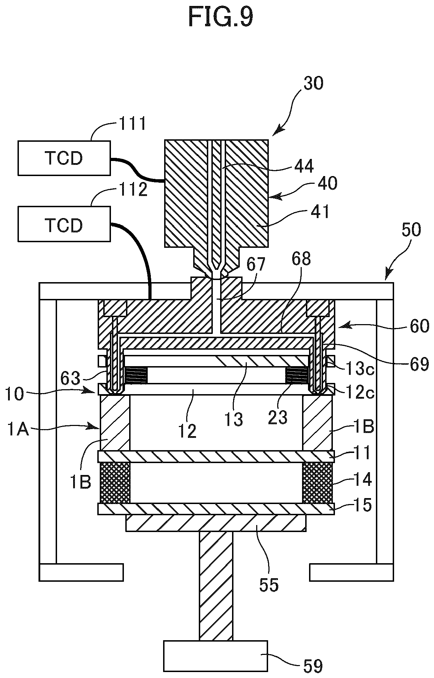

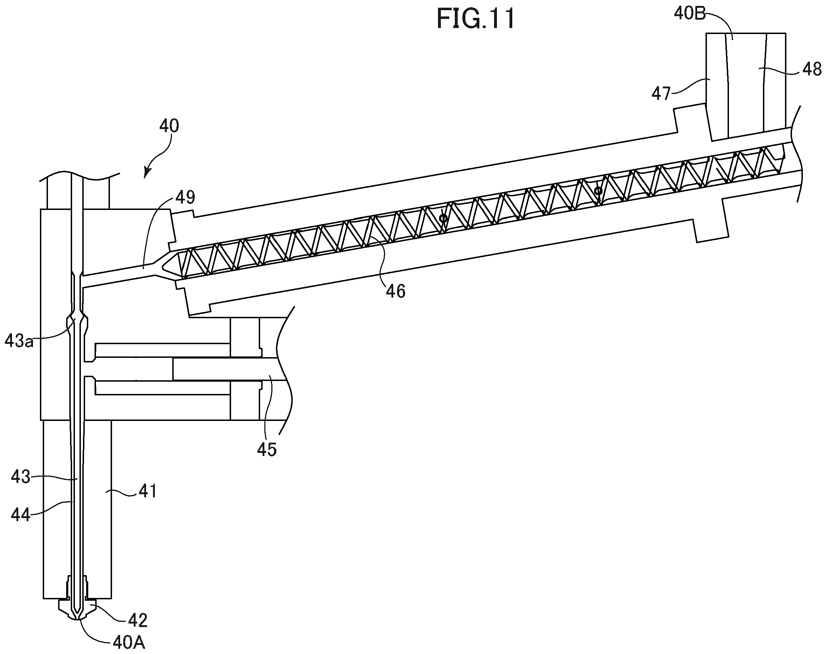

As shown in FIG. 7, the resin injection device 30 includes, in a narrow sense, a resin injector 40 and a table portion 50. In a broad sense, the resin injection device 30 for injecting the resin into the rotor core 1A is formed by placing a runner 60 in the table portion 50. As shown in FIG. 11, the resin injector 40 includes: an inlet portion 47 having a resin inlet hole 48 whose upper end serves as a resin material inlet port 40B into which a solid resin is placed; a screw 46 that sends the resin placed into the resin material inlet port 40B to a channel 49 while melting and agitating the resin; a tubular portion 41 having a channel 44 that communicates with the channel 49; a nozzle portion 42 fixed to the lower end of the tubular portion 41 and having its lower end serving as an ejection port 40A for ejecting the resin; a stop valve 43 that allows or stops the resin flow from the channel 49 to the channel 44 by an on-off valve 43a; and a plunger 45 that ejects the resin in the channel 44 from the ejection port 40A. As shown in FIG. 9, a temperature control device 111 (Temp Control Device) capable of heating or cooling by, for example, using a heating wire in the resin injection device 30 or supplying a cooling medium is attached to the resin injector 40. The temperature control device 111 controls the temperature of the resin to, for example, about 80°C that is equal to or higher than the melting start temperature and lower than the curing start temperature in order to keep the resin between the resin material inlet port 40B and the ejection port 40A molten. In particular, the temperature control device 111 heats the screw 46 to melt the resin that has been placed into the resin material inlet port 40B and that is solid at room temperature and to keep the resin molten.

As shown in FIG. 7, the table portion 50 includes: a lower plate 51 disposed on the lower side; side walls 53 fixed to the side ends of the lower plate 51; and an upper plate 52 supported by the side walls 53 and disposed parallel to and above the lower plate 51 so as to face the lower plate 51. The lower plate 51 has a hole 51a in its central portion. The table portion 50 includes: the placement base 55 formed so as to conform to the shape of the hole 51a and having an upper surface 55a serving as a base on which the placement plate 15 of the holding jig 10 is placed; and a drive device 59 that controls the placement base 55 to move up and down and to rotate. Although not shown in the figure, the upper surface 55a of the placement base 55 has protrusions. When the holding jig 10 is placed on the placement base 55, the recesses 15d in the lower surface 15b of the placement plate 15 of the holding jig 10 described above are fitted on the protrusions. The holding jig 10 is thus restrained in position in the rotation direction with respect to the placement base 55. That is, the positions of the holding jig 10 and the rotor core 1A in the rotation direction are controlled by rotation of the placement base 55.

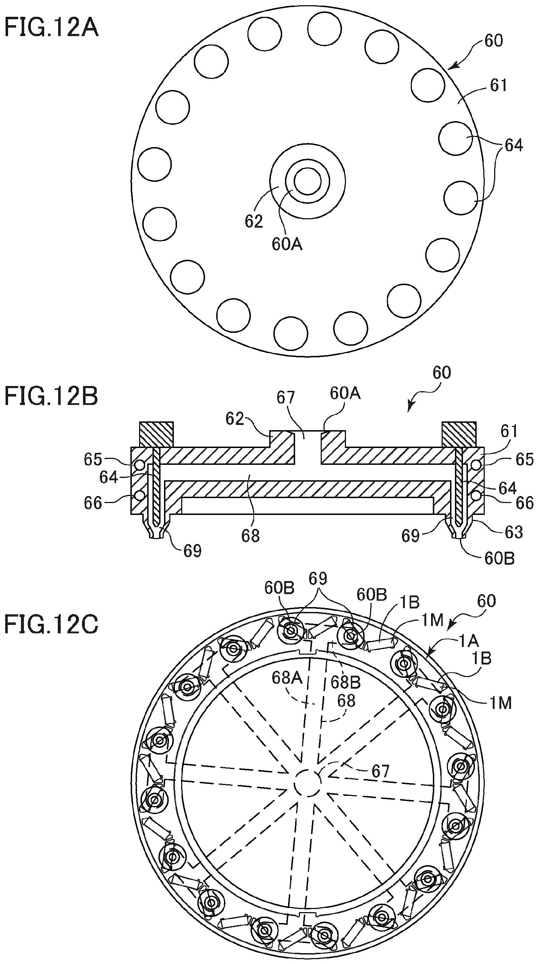

As shown in FIG. 6, the upper plate 52 of the table portion 50 has an attachment hole 52a. The runner 60 is detachably attached by fitting an upper shaft portion 62 of the runner 60 into the attachment hole 52a. As shown in FIGS. 12A and 12B, the runner 60 includes: a body 61 in the shape of a disc, the upper shaft portion 62 in the shape of a shaft extending upward from the center of the body 61; and a plurality of branch nozzles 63 extending downward from the lower outer periphery of the body 61. In the present embodiment, the number of branch nozzles 63 is half the number of hole portions 1B of the rotor core 1A. That is, when the number of hole portions 1B (i.e., magnets 1M) of the rotor core 1A is 32, the number of branch nozzles 63 is 16.

As shown in FIG. 12B, an inlet channel 67 whose upper end serves as a resin inlet port 60A is formed inside the runner 60 so as to extend in the vertical direction along the central axis of the upper shaft portion 62 and the disc shape of the body 61. As shown in FIG. 12C, branch channels 68 that branch off from the inlet channel 67 toward the branch nozzles 63 are formed inside the body 61. The branch channels 68 include: eight radial channels 68A that branch off in a radial pattern from the inlet channel 67 in the horizontal direction orthogonal to the central axis; and circumferential channels 68B branching off to both sides in the circumferential direction from the radially outer portions of the radial channels 68A. As shown in FIG. 12B, injection channels 69 are formed inside the body 61 and the branch nozzles 63 so as to extend downward from the circumferential ends of the circumferential channels 68B of the branch channels 68. The lower ends of the injection channels 69 are formed as ejection ports 60B. Stop valves 64 that open or close the ejection ports 60B are provided inside the injection channels 69.

The runner 60 further includes: a heating wire 65 disposed along the entire circumference of the runner 60; and a cooling medium channel 66 similarly disposed along the entire circumference of the runner 60. The heating wire 65 and the cooling medium channel 66 are connected to a temperature control device 112 (Temp Control Device) shown in FIG. 9. Since the runner 60 is separated from the pressing plate 12 of the holding jig 10 and is affected by the temperatures of the holding jig 10 and the rotor core 1A as thermal disturbance, the temperature control device 112 keeps the resin between the inlet port 60A and the ejection ports 60B at, for example, about 80°Cthat is equal to or higher than the melting start temperature and lower than the curing start temperature by supplying a current to the heating wire 65 for heating or by supplying a cooling medium to the cooling medium channel 66 for cooling. Since the temperature control device 112 is connected to the runner 60, it is difficult to move the runner 60 in the vertical direction or the rotation direction. As will be described later, the placement base 55 is driven by the drive device 59 to move up and down or to rotate. Therefore, the runner 60 is not moved in the resin injection step S6.

In the injection device placement step S5 of placing the rotor core 1A with the holding jig 10 attached thereto into the resin injection device 30 structured as described above, the resin injector 40 is first separated from the table portion 50 and the placement base 55 is lowered until the upper surface 55a is flush with the lower plate 51, as shown in FIG. 6. In this state, as shown in FIG. 7, the upper shaft portion 62 is fitted in the attachment hole 52a of the upper plate 52 to attach the runner 60 to the upper plate 52. In this state, as shown in FIG. 8, the rotor core 1A with the holding jig 10 attached thereto is placed on the placement base 55. At this time, the protrusions (not shown) on the upper surface 55a of the placement base 55 are fitted in the recesses 15d in the placement plate 15 of the holding jig 10, as described above. The rotor core 1A is thus fixed so as not to be movable in the rotation direction. At this time, the heat insulating member 14 is located between the placement plate 15 and the lower plate 11. This prevents the heat of the rotor core 1A from being absorbed by, for example, the placement base 55 and thus prevents the rotor core 1A from cooling. As shown in FIG. 9, the placement base 55 is moved up by the drive device 59, and the branch nozzles 63 are inserted into through holes 13c of the upper plate 13 and the injection holes 12c of the pressing plate 12 of the holding jig 10 and are set in such a manner that the tips of the branch nozzles 63 are in pressure contact with the injection holes 12c. The rotor core 1A is thus placed in the resin injection device 30.

### [Details of Resin Injection Step]

Next, the resin injection step S6 will be described in detail with reference to FIGS. 9 and 12C. First, the positional relationship between the injection holes 12c of the pressing plate 12 of the holding jig 10 and the hole portions 1B of the rotor core 1A and the shape of the injection holes 12c will be described.

When the holding jig 10 is attached to the rotor core 1A, the injection holes 12c of the pressing plate 12 are located at such positions that the injection holes 12c at least partially overlap the hole portions 1B of the rotor core 1A. Specifically, as shown in FIG. 12C, the center of each injection hole 12c is positioned on the radially inner side of the rotor core 1A with respect to the hole portion 1B. When the resin is injected into the hole portions 1B, the magnets 1M are pressed radially outward against the hole portions 1B by the pressure of the resin. As a result, the magnets 1M are located closer to the radially outer side of the rotor core 1A. That is, when the rotor core 1A is attached to a stator as the rotating electrical machine, the magnets 1M are located as close to the stator as possible. The magnetic force is thus increased, and the output and efficiency of the rotating electrical machine are improved.

In the resin injection step S6 of injecting the resin from the injection holes 12c of the pressing plate 12 of the holding jig 10 into the hole portions 1B of the rotor core 1A, as shown in FIG. 9, the stop valve 43 is opened and the resin in the channel 44 is pressed by the plunger 45 in the resin injector 40 of the resin injection device 30 (see FIG. 11). The resin is thus ejected from the ejection port 40A into the inlet port 60A of the runner 60. The resin flows from the inlet channel 67 of the runner 60 into the eight radial channels 68A, and further flows from the radial channels 68A into the ejection ports 60B of the 16 branch nozzles 63 through the circumferential channels 68B. When the stop valves 64 are opened, the resin is ejected from the 16 ejection ports 60B into the injection holes 12c, and is injected from the injection holes 12c into the 16 hole portions 1B of the rotor core 1A. In each hole portion 1B, the resin flows around the magnets 1M in the hole portions 1B while pressing the magnet 1M toward the radially outer side of the rotor core 1A.

At this time, air inside the hole portions 1B escapes from the air holes of the lower plate 11 of the holding jig 10, and the hole portions 1B are filled with the resin without voids. The rotor core 1A (in particular, the inner peripheral surfaces of the hole portions 1B) has been heated to a temperature higher than the curing start temperature of the resin, as described above. Therefore, the inside of the resin in each hole portion 1B remains liquid, but the resin in each hole portion 1B starts to cure from the portion that comes into contact with the side surface of the hole portion 1B. The resin is thus prevented from leaking from the gaps between the laminated steel sheets 1a in the hole portions 1B. The resin thus fills up to the opening portions of the hole portions 1B, and also fills the injection holes 12c of the pressing plate 12.

After the eight hole portions 1B of the rotor core 1A are filled with the resin, the placement base 55 is lowered by the drive device 59 so that the rotor core 1A with the holding jig 10 attached thereto is separated from the branch nozzles 63, as shown in FIG. 8. The placement base 55 is then rotated by the drive device 59 to perform phase adjustment so that the branch nozzles 63 are positioned above the hole portions 1B that have not been filled with the resin. Thereafter, the placement base 55 is moved up, and the branch nozzles 63 are inserted and set in the injection holes 12c where the resin injection has not been performed. The resin is injected in a manner similar to that described above to fill the remaining 16 hole portions 1B out of the 32 hole portions 1B. The resin injection step S6 is thus finished.

### [Details of Magnet Fixing Step]

Next, the magnet fixing step S7 will be described in detail. When the resin injection step S6 described above is finished, the rotor core 1A with the holding jig 10 attached thereto is heated again in the resin injection device 30 to, for example, about 170°C(same as a shrink fit start temperature that will be describe later) that is equal to or higher than the curing start temperature of the resin by a heating device (IH coil etc.) That is, the resin in each hole portion 1B of the rotor core 1A starts to cure from the portion that comes into contact with the rotor core 1A during the injection as described above. However, the inside of the resin in each hole portion 1B has not been completely cured. Therefore, in the magnet fixing step S7, heating is further performed to keep the resin in the hole portions 1B at a temperature equal to or higher than the curing start temperature for a predetermined time. The magnets 1M are thus completely fixed by the resin in the hole portions 1B of the rotor core 1A. The present embodiment illustrates an example in which the rotor core 1A is heated to, for example, about 170°Cby the heating device in the magnet fixing step S7. However, since the rotor core 1A has already been heated to, for example, about 140°Cthat is equal to or higher than the curing start temperature of the resin in the heating step S4, the rotor core 1A may just be kept warm so that the temperature of the rotor core 1A is maintained at a temperature equal to or higher than the curing start temperature until the resin is cured and the magnets are fixed. However, when the rotor core 1A is heated as in the present embodiment, the time it takes for the resin to cure is certainly shorter even in consideration of the subsequent cooling time.

In the first embodiment, the heating step S4 and the magnet fixing step S7 are described as separate steps. However, as described above, the heating of the rotor core 1A is started in the heating step S4, and the temperature of the rotor core 1A is kept at a temperature equal to or higher than the curing start temperature of the resin until the magnet fixing step S7. Therefore, the heating step in a broad sense continues for the duration of the heating step S4, the injection device placement step S5, the resin injection step S6, and the magnet fixing step S7. In other words, although the heating step S4 is performed before the resin injection, heating in the heating step S4 is performed in order to cure the resin. Therefore, it can be said that the heating step S4 is the step of fixing the magnets 1M in the rotor core 1A.

### [Shrink Fit Device Placement Step]

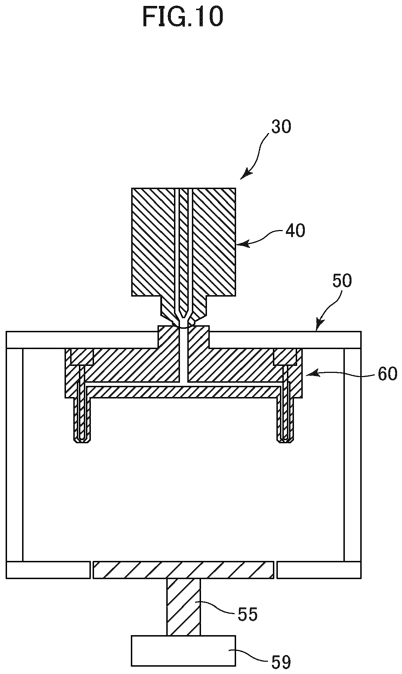

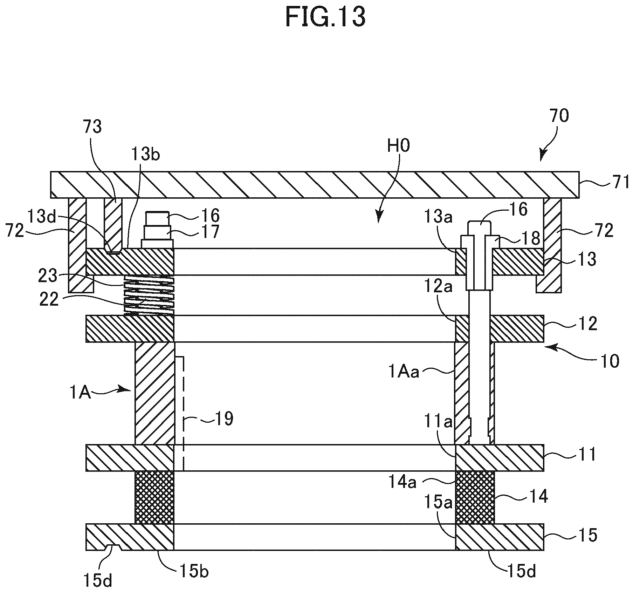

Next, the shrink fit device placement step S8 will be described in detail with reference to FIGS. 10, 13, 14, and 15. As shown in FIG. 10, when the magnet fixing step S7 described above is finished, the rotor core 1A with the holding jig 10 attached thereto is first removed from the placement base 55 of the resin injection device 30. That is, the rotor core 1A is removed from the resin injection device 30. At this time, as shown in FIG. 13, the rotor core 1A with the holding jig 10 attached thereto is transferred by a transfer robot device 70 by holding the holding jig 10.

As shown in FIG. 13, the transfer robot device 70 includes: a device body 71; a plurality of arm members 72 that is a holding portion provided so as to be movable in the horizontal direction with respect to the device body 71; and a positioning shaft 73 that is an engaging portion fixed and supported on the device body 71. The upper surface 13b of the upper plate 13 of the holding jig 10 has a recess 13d as an engaged portion. After the entire transfer robot device 70 is moved horizontally, the transfer robot device 70 is lowered so that the positioning shaft 73 is fitted in the recess 13d. In this state, the arm members 72 are moved toward the center of the rotor core 1A. The arm members 72 thus hold the upper plate 13 of the holding jig 10. That is, the rotor core 1A with the holding jig 10 attached thereto is held by the transfer robot device 70.

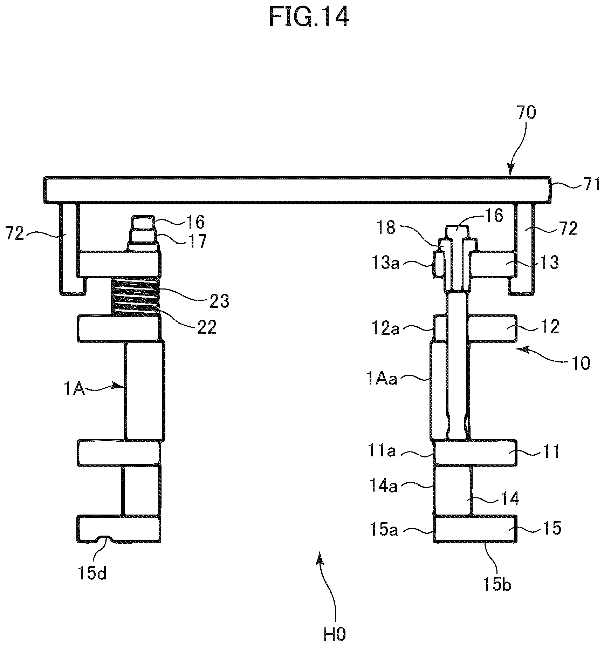

As described above, the upper plate 13 has the hole 13a, the pressing plate 12 has the hole 12a, the lower plate 11 has the hole 11a, the heat insulating member 14 has the hole 14a, and the placement plate 15 has the hole 15a, and these holes have an inner diameter slightly larger than an inner peripheral surface 1Aa of the rotor core 1A. The rotor core 1A with the holding jig 10 attached thereto therefore has a through hole HO extending through the center of the rotor core 1A in the axial direction. The plurality of support plates 19 (see FIG. 5) attached to the hole 11a of the lower plate 11 as described above are removed when the rotor core 1A is transferred by the transfer robot device 70, as shown in FIG. 14.

On the other hand, as shown in FIG. 15, the shrink fit device 100 is provided as a station next to the resin injection device 30 on the production line of the factory as described above, and roughly includes: a lifting device 80 capable of lifting and lowering the rotor core 1A; and a placement table 90 for placing the rotor hub 1H. The lifting device 80 includes: a placement base 81 serving as a base on which the placement plate 15 of the holding jig 10 is placed; and a drive shaft 82 connected to a drive device, not shown, that controls the placement base 81 to move up and down and to rotate. The placement base 81 has with a plurality of protrusions 81b. The placement table 90 is fixed and supported by a fixed support shaft 91, and has an annular recess 90a formed in a ring shape along the entire circumference of the placement table 90.

In the shrink fit device placement step S8 of placing the rotor core 1A and the rotor hub 1H on the shrink fit device 100 structured as described above, the rotor hub 1H is placed on the placement table 90 by an articulated robot, not shown, etc. such that a distal end 1Hb of a drum-shaped hub portion 1Ha of the rotor hub 1H is fitted in the annular recess 90a and positioned and fixed. The placement base 81 is lifted so as to be located above the uppermost portion of the rotor hub 1H placed on the placement table 90. In this state, the holding jig 10 attached to the rotor core 1A and held by the transfer robot device 70 is placed on the placement base 81 so that the recesses 15d in the lower surface 15b of the placement plate 15 of the holding jig 10 described above are fitted on the protrusions 81b and positioned. At this time, the heat insulating member 14 is located between the placement base 81 and the lower plate 11. This prevents the heat of the rotor core 1A from being absorbed by, for example, the placement base 81 and thus prevents the rotor core 1A from cooling.

The rotor core 1A thus placed on the placement base 81 is quickly transferred by the transfer robot device 70 after the magnet fixing step S7 and is not cooled during this time. In addition, the amount of heat in the holding jig 10 is large and thus the holding jig 10 effectively retains the temperature of the rotor core 1A. Therefore, even if the temperature of the rotor core 1A slightly drops during the transfer (e.g., less than 1°C even if it drops), it is maintained at about 170°Cthat is equal to or higher than the curing start temperature of the resin. Accordingly, the rotor core 1A is in an expanded state as compared to the state at room temperature. In particular, the inner peripheral surface 1Aa has a larger diameter as compared to the state at room temperature. It can therefore be said that this temperature is an insertable temperature at which the rotor hub 1H can be inserted into the inner peripheral surface 1Aa of the rotor core 1A. Such a temperature of the rotor core 1A is a temperature at which shrink fitting between the rotor core 1A and the rotor hub 1H can be started. Therefore, this temperature is hereinafter referred to as "shrink fitting start temperature." The rotor hub 1H is installed on the placement table 90 at room temperature.

### [Rotor Hub Insertion Step]

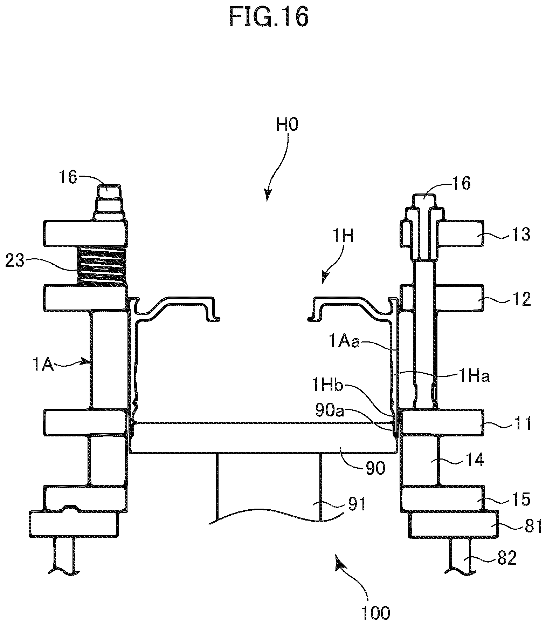

Next, the rotor hub insertion step S9 will be described in detail with reference to FIG. 16. In the rotor hub insertion step S9, when the shrink fit device placement step S8 is finished, the placement base 81 of the lifting device 80 is driven so as to be lowered, so that the rotor hub 1H fixed and supported on the placement table 90 is inserted into the through hole HO of the rotor core 1A that is moved relative to the rotor hub 1H, as shown in FIG. 16.

### [Details of Cooling Step]

Next, the cooling step S10 will be described in detail. When the rotor hub 1H is inserted into the rotor core 1A in the rotor hub insertion step S9 as described above, the rotor core 1A is cooled by a cooling device, not shown (e.g., a fan etc.) with both the rotor core 1A and the rotor hub 1H placed in the shrink fit device 100. The rotor core 1A is thus cooled and shrinks. In particular, the diameter of the inner peripheral surface 1Aa of the rotor core 1A is reduced. Therefore, the rotor core 1A is fixed to the hub portion 1Ha of the rotor hub 1H. That is, shrink fitting between the rotor core 1A and the rotor hub IH is completed. The rotor 1 of the rotating electrical machine is thus completed.

### [Details of Jig Removal Step]

Lastly, the jig removal step S 11 will be described in detail. After the rotor core 1A and the rotor hub 1H are shrink-fitted and fixed in the cooling step S 10, the holding jig 10 is removed from the rotor 1. That is, the holding jig 10 is removed from the rotor 1 in the opposite order to that in which the holding jig 10 is attached to the rotor core 1A in the jig attachment step S3. Specifically, the nuts 17 shown in FIG. 3 are loosened, and the wedge members 18, the upper plate 13, the springs 23, etc. are removed. Then, the pressing plate 12 is removed from the shafts 16 and thus removed from the lower plate 11. Lastly, the rotor 1 is removed upward from the lower plate 11. The jig removal step S11 is thus finished.

In the resin injection step S6 described above, the resin is injected into the hole portions 1B of the rotor core 1A, and is also injected the injection holes 12c of the pressing plate 12. When the pressing plate 12 is removed from the rotor core 1A in the jig removal step S11, the pressing plate 12 is separated from the rotor core 1A. At this time, a portion of the resin with low rigidity breaks and is separated from the resin in the hole portions 1B of the rotor core 1A. That is, when the branch nozzles 63 are separated from the injection holes 12c, the resin may stretch like threads from the ejection ports 60B and form burrs. However, these burrs are formed on the portion remaining in the injection holes 12c of the pressing plate 12, and this portion is cut off and discarded. Therefore, even when such burrs are formed on this portion, no burrs will remain on the rotor core 1A.

### [Changes in Temperature of Rotor Core and Temperature of Resin in Each Step]

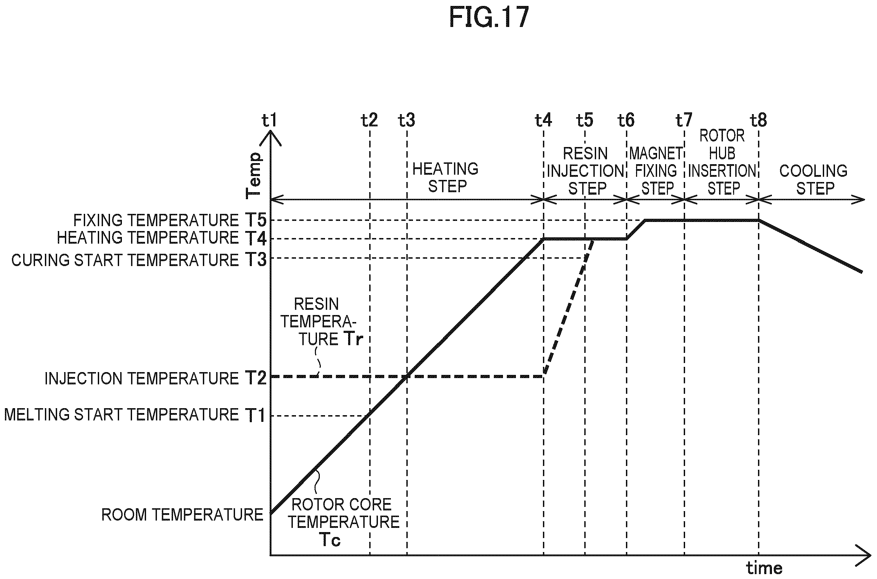

Next, changes in temperature of the rotor core and temperature of the resin in each of the above steps will be described with reference to FIG. 17.

As shown in FIG. 17, when the heating step S4 of heating the rotor core 1A (see FIG. 1) is started at time t1, the temperature Tc of the rotor core 1A (hereinafter referred to as "rotor core temperature") is room temperature, and the temperature Tr of the resin being heated and melted by the resin injector 40 (hereinafter referred to as "resin temperature") is a temperature higher than the melting start temperature T1 (e.g., 60°C) and lower than the curing start temperature T3 (e.g., 80°C), so that the resin that is fixed at room temperature can be injected into the hole portions 1B of the rotor core 1A. The room temperature is the temperature of the environment where the resin injection device 30 is installed in a factory etc., and is assumed to be, for example, about 15°Cto 30°C The resin temperature Tr at which the resin is melted by the resin injector is hereinafter referred to as "injection temperature T2" because it is a temperature at which the resin is injected into the hole portions 1B of the rotor core 1A.

In the heating step S4 in the first embodiment, the rotor core 1A is heated to the heating temperature T4 (e.g., 140°C) that is higher than the curing start temperature T3 of the resin (e.g., 110°C) and lower than the fixing temperature T5 (i.e., lower than the insertable temperature). Therefore, the rotor core temperature Tc becomes higher than the melting start temperature T1 at time t2, and becomes higher than the injection temperature T2 at time t3. At time t4, the rotor core 1A is placed In the resin injection device 30 (injection device placement step S5). The process then proceeds to the resin injection step S6, and the resin is injected from the resin injector 40 into the hole portions 1B of the rotor core 1A. The resin injected into the hole portions 1B, in particular, a portion that comes into contact with the hole portions 1B, is then heated by the amount of heat of the rotor core 1A, and the resin temperature Tr of this resin becomes higher than the curing start temperature T3 at time t5 and increases substantially to the heating temperature T4. Since the heat capacity of the metal rotor core 1A is much larger than the heat capacity of the resin injected into the hole portions 1B of the rotor core 1A, the rotor core temperature Tc may drop but only slightly (e.g., about 0.1°C).

When the resin injection step S6 is finished at time t6, the rotor core 1A is removed from the resin injection device 30. The process then proceeds to the magnet fixing step S7. The rotor core 1A is reheated by a heating device, not shown, to the fixing temperature T5 (e.g., 170°C) (i.e., the shrink fitting start temperature) that is higher than the heating temperature T4 (e.g., 140°C) and lower than the glass transition start temperature. After waiting until a predetermined period elapses to make sure that the resin injected into the hole portions 1B of the rotor core 1A is cured, the rotor core 1A is placed on the shrink fit device 100 at time t7 when curing of the resin has been definitely completed (shrink fit device placement step S8). The process then proceeds to the rotor hub insertion step S9.

When the rotor hub insertion step S9 is performed at time t7, the rotor hub 1H is inserted into the rotor core 1A while the rotor core temperature Tc is maintained at substantially the same temperature as the fixing temperature T5 (temperature equal to or higher than the resin curing start temperature and lower than the glass transition start temperature) as the shrink fitting start temperature. When the rotor hub insertion step S9 is finished at time t8, the process proceeds to the cooling step S10 with the rotor core 1A and the rotor hub 1H being still placed in the shrink fit device 100. The rotor core 1A is cooled to shrink the rotor core 1A and fix the rotor core 1A to the rotor hub 1H. Shrink fitting is thus completed. That is, the rotor 1 is completed. Although not shown in FIG. 17, after the cooling step S10 is finished, the jig removal step S 11 of removing the holding jig 10 is performed. The steps of manufacturing the rotor are thus completed.

In the rotor manufacturing method according to the first embodiment described above, the rotor core 1A heated to a temperature equal to or higher than the curing start temperature of the resin in the magnet fixing step S7 is moved to the shrink fit device 100 without being cooled in the shrink fit device placement step S8. In the rotor hub insertion step S9, the rotor hub 1H is inserted into the rotor core 1A that has been expanded by the heat used to cure the resin. Therefore, the shrink fitting can be efficiently performed.

Since the magnet fixing step S7, the shrink fit device placement step S8, and the rotor hub insertion step S9 are performed (that is, the rotor core 1A is moved) with the holding jig 10 kept attached to the rotor core 1A, the rotor core 1A is less likely to cool while being moved due to the amount of heat of the holding jig 10. The heat can thus be efficiently used. Moreover, the holding jig 10 can be held to move the rotor core 1A from the resin injection device 30 to the shrink fit device 100. Since the rotor core 1A is not directly held, damage to or deformation of the rotor core 1A can be prevented. Moreover, the rotor hub insertion step S9 is performed with the holding jig 10 kept attached to the rotor core 1A. Therefore, the rotor core 1A is less likely to be damaged or deformed as compared to the case where, for example, the rotor core 1A is directly held and inserted into the rotor hub 1H. In addition, for example, even if the rotor core 1A comes into contact with the rotor hub 1H, the rotor core 1A is less likely to cool due to the amount of heat of the holding jig 10. Distortion of the rotor core 1A can thus be reduced, and the insertion can be more easily performed. In particular, when performing the rotor hub insertion step S9 with the holding jig 10 kept attached to the rotor core 1A, tilting of the rotor core 1A is allowed due to the springs 23, and the rotor hub 1H can be inserted smoothly and easily..

### <Second Embodiment>

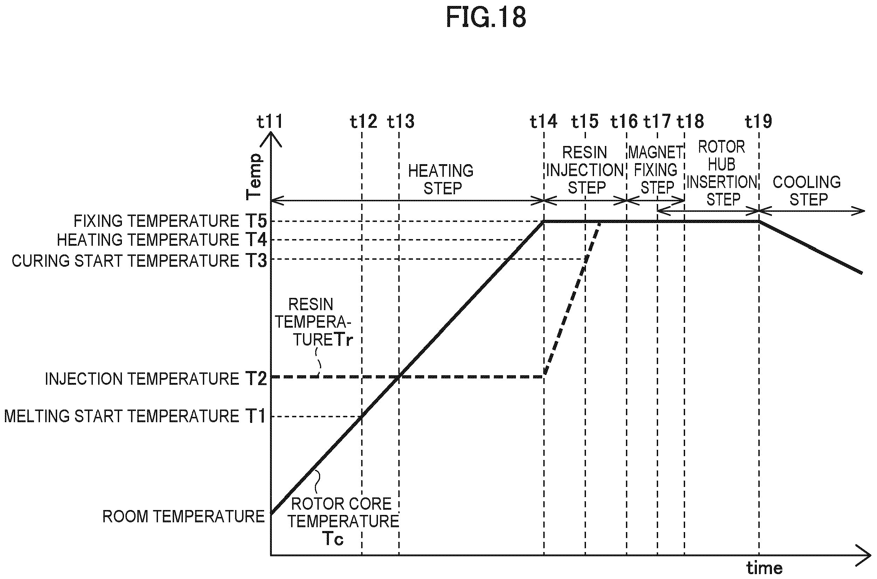

Next, a second embodiment in which the first embodiment is partially modified will be described with reference to FIG. 18. In the description of the second embodiment, the same parts as those of the first embodiment are denoted by the same reference signs, and description thereof will be omitted.

In the first embodiment described above, the rotor core 1A is heated to the heating temperature T4 (e.g., 140°C) in the heating step S4. In the second embodiment, however, the rotor core 1A is heated to the fixing temperature T5 (e.g., 170°C) (i.e., the shrink fitting start temperature) or higher in the heating step S4. In the first embodiment, the rotor hub insertion step S9 is performed after waiting until the predetermined time elapses to make sure that the resin inserted into the hole portions 1B of the rotor core 1A is cured, namely after the magnet fixing step S7 is finished. In the second embodiment, however, the rotor hub insertion step S9 is performed when the resin inserted into the hole portions 1B of the rotor core 1A is considered to have been cured to some extent. Namely, at least part of the magnet fixing step S7 and at least part of the rotor hub insertion step S9 are performed at the same time.

Specifically, as shown in FIG. 18, when the heating step S4 of heating the rotor core 1A (see FIG. 1) is started at time t11, the rotor core temperature Tc is room temperature, and the resin temperature Tr of the resin heated in the resin injector 40 is the injection temperature T2

In the heating step S4 in the second embodiment, the rotor core 1A is heated to the fixing temperature T5 (e.g., 170°C) (i.e., the shrink fitting start temperature). Therefore, the rotor core temperature Tc becomes higher than the melting start temperature T1 at time t12, and becomes higher than the injection temperature T2 at time t13. At time t14, the rotor core 1A is placed in the resin injection device 30 (injection device placement step S5). The process then proceeds to the resin injection step S6, and the resin is injected from the resin injector 40 into the hole portions 1B of the rotor core 1A. The resin injected into the hole portions 1B, in particular, a portion that comes into contact with the hole portions 1B, is then heated by the amount of heat of the rotor core 1A, and the resin temperature Tr of this resin becomes higher than the curing start temperature T3 at time t15 and increases substantially to the fixing temperature T5.

When the resin injection step S6 is then finished at time t16, the rotor core 1A is removed from the resin injection device 30, and the process proceeds to the magnet fixing step S7. The rotor core 1A is then kept at the fixing temperature T5. When the resin has been cured to some extent, the process proceeds to the rotor hub insertion step S9 at time t17, and the rotor hub 1H is inserted into the rotor core 1A while maintaining the rotor core temperature Tc at the fixing temperature T5 as the shrink fitting start temperature. Therefore, curing of the resin injected into the hole portions 1B of the rotor core 1A and insertion of the rotor hub 1H into the rotor core 1A are performed simultaneously for at least a certain period of time.

The resin injected into the hole portion 1B of the rotor core 1A has been definitely cured at time t18. When the rotor hub insertion step S9 is finished at time t19, the cooling step S 10 is performed with both the rotor core 1A and the rotor hub 1H kept in the shrink fit device 100. The rotor core 1A is cooled so that rotor core 1A is shrunk and fixed to the rotor hub 1H. The shrink fitting is thus completed. That is, the rotor 1 is completed.

In the rotor manufacturing method according to the second embodiment described above as well, the rotor core 1A heated to the fixing temperature T5 in the magnet fixing step S7 is moved to the shrink fit device 100 without being cooled in the shrink fit device placement step S8. In the rotor hub insertion step S9, the rotor hub 1H is inserted into the rotor core 1A that has been expanded by the heat used to cure the resin. Therefore, the shrink fitting can be efficiently performed.

In the second embodiment, the rotor core 1A is heated to the fixing temperature T5 in the heating step S4. Therefore, curing of the resin injected into the hole portions 1B of the rotor core 1A can be accelerated and productivity can be improved, as compared to the case where the rotor core 1A is heated to the heating temperature T4 in the heating step S4 as in the first embodiment. Moreover, at least part of the magnet fixing step S7 and at least part of the rotor hub insertion step S9 are performed simultaneously. Therefore, the time required for the manufacturing process of the rotor 1 can be reduced and productivity can be improved, as compared to the case where the rotor hub insertion step S9 is performed after the magnet fixing step S7 as in the first embodiment.

Since the structures, functions, and effects of the second embodiment other than those described above are the same as the first embodiment, description thereof will be omitted.

### <Summary of Embodiments>

The rotor manufacturing method described above is
a rotor manufacturing method for manufacturing a rotor (1) of a rotating electrical machine. The rotor manufacturing method includes:
a jig attachment step (S3) of attaching a holding jig (10) to a rotor core (1A) formed by laminated steel sheets (1a), the holding jig (10) being a member that holds the rotor core (1A) by sandwiching the rotor core (1A) in a stacking direction of the laminated steel sheets (1a) and pressing the rotor core (1A);
a transmission member insertion step (S9) of inserting a transmission member (1H) into an inner peripheral surface (1Aa) of the rotor core (1A) with the rotor core (1A) and the holding jig (10) heated to a temperature equal to or higher than an insertable temperature (T5) at which the transmission member (1H) is able to be inserted into the inner peripheral surface (1Aa) of the rotor core (1A), the transmission member (1H) being a member that transmits rotation; and
a cooling step (S10) of cooling the rotor core (1A) to fix the rotor core (1A) and the transmission member (1H) together.

The transmission member insertion step (S9) is performed with the holding jig (10) kept attached to the rotor core (1A).

With this structure, when the rotor hub 1H is inserted into the rotor core 1A, the rotor core 1A is less likely to cool due to the amount of heat of the holding jig 10. Moreover, since the rotor core 1A is pressed by the holding jig 10, distortion of the rotor core 1A can be reduced. Productivity can thus be improved.

The rotor manufacturing method further includes:
a heating step (S4) of heating the rotor core (1A) and the holding jig (10) so that a temperature of the rotor core (1A) becomes equal to or higher than the insertable temperature (T5) that is higher than a curing start temperature (T3) of a resin;
a resin injection step (S6) of injecting a thermosetting resin into hole portions (1B) of the rotor core (1A) with magnet members (1M) placed therein by a resin injection device (30) after the heating step (S4); and
a resin curing step (S7) of maintaining the rotor core (1A) at the curing start temperature (T3) or higher to cure the resin injected into the hole portions (1B) after the resin injection step (S6).

Curing of the resin injected into the hole portions 1B of the rotor core 1A can thus be accelerated, and productivity can be improved. Moreover, in the rotor hub insertion step S9, the rotor hub 1H can be inserted into the rotor core 1A that has been expanded by the heat used to cure the resin. Therefore, the shrink fitting can be efficiently performed.

In the rotor manufacturing method,
at least part of the resin curing step (S7) and at least part of the transmission member insertion step (S9) are performed simultaneously.

Therefore, the time required for the manufacturing process of the rotor 1 can be reduced, and productivity can be improved.

The rotor manufacturing method further includes:
a heating step (S4) of heating the rotor core (1A) and the holding jig (10) so that a temperature of the rotor core (1A) becomes equal to or higher than a curing start temperature (T3) of a resin and lower than the insertable temperature (T5);
a resin injection step (S6) of injecting a thermosetting resin into hole portions (1B) of the rotor core (1A) with magnet members (1M) placed therein by a resin injection device (30) after the heating step (S4); and
a resin curing step (S7) of, after the resin injection step (S6), heating the rotor core (1A) and the holding jig (10) so that the temperature of the rotor core (1A) becomes equal to or higher than the insertable temperature (T5) that is higher than the curing start temperature (T3), and thus curing the resin injected into the hole portions (1B).

Accordingly, in the rotor hub insertion step S9, the rotor hub 1H can be inserted into the rotor core 1A that has been expanded by the heat used to cure the resin. The shrink fitting can therefore be efficiently performed.

In the rotor manufacturing method,
the transmission member insertion step (S9) is performed after the resin curing step (S7).

As a result, it is possible to avoid inserting the rotor hub 1H into the rotor core 1A before the resin cures. The magnets 1M pressed radially outward against the hole portions 1B by the injection of the resin can thus be prevented from moving radially inward inside the hole portions 1B.

### <Possibilities of Other Embodiments>

The first and second embodiments described above illustrate an example in which the rotor hub 1H in which a clutch etc. is to be placed is inserted into the rotor core 1A. However, the present disclosure is not limited to this. A rotor may be formed by inserting a mere shaft into a rotor core and fixing the shaft in the rotor core. That is, any element can be fixed in the rotor core as long as it is a transmission member that transits rotation of the rotor.

The first and second embodiments illustrate an example in which, after the resin is cured in the magnet fixing step S7, the rotor core 1A and the rotor hub 1H are shrink-fitted in the shrink fit device placement step S8 and the rotor hub insertion step S9. However, the resin may be cured in the magnet fixing step after the rotor core 1A and the rotor hub 1H are shrink-fitted in the shrink fit device placement step and the rotor hub insertion step. That is, the magnet fixing step S7 and the rotor hub insertion step S9 may be performed in any order as long as the amount of heat of the rotor core 1A heated in one of these steps is used in the other step and the holding jig 10 is kept attached to the rotor core 1A in both of the steps.

The first and second embodiments illustrate an example in which the place where the resin is injected and cured and the place where the rotor hub 1H is inserted into the rotor core 1A and then cooled and shrink-fitted are different. However, these processes may be performed at the same place. In this case, the resin injection device and the shrink fit device may be structured as a single device having the functions of these devices.

The first and second embodiments illustrate an example in which the rotor core 1A with the holding jig 10 attached thereto is moved with respect to the fixed and supported rotor hub 1H by the shrink fit device 100 to insert the rotor hub 1H into the core 1A. However, the present disclosure is not limited to this. The holding jig 10 may be fixed and supported, and the rotor hub 1H may be moved and inserted into the rotor core 1A. Alternatively, both the holding jig 10 and the rotor hub 1H may be moved to insert the rotor hub 1H into the rotor core 1A.

The first and second embodiments illustrate an example in which the holding jig 10 roughly includes the lower plate 11, the pressing plate 12, the upper plate 13, the heat insulating member 14, the placement plate 15, and the springs 23. However, the present disclosure is not limited to this. The holding jig 10 may have any structure as long as it can sandwich and hold the rotor core 1A in the stacking direction.

The first and second embodiments illustrate an example in which the transfer robot device 70 includes the device body 71 and the arm members 72. However, the present disclosure is not limited to this, and any transfer robot device may be used such as an articulated robot that holds the holding jig 10 by a member like fingers.

The first and second embodiments illustrate an example in which the resin injector 40 has a structure similar to that of a so-called compression molding resin injector that compresses and ejects a molten resin. However, the present disclosure is not limited to this. For example, the resin injector 40 may be a so-called transfer molding resin injector that puts a preheated resin material into a transfer chamber and then ejects the resin material.

### INDUSTRIAL APPLICABILITY

The rotor manufacturing method can be used to manufacture a rotor of a rotating electrical machine, and is particularly suitable for use in applications that require an improvement in rotor productivity.

### Description of the Reference Numerals

1 ... Rotor/1a ... Laminated Steel Sheet/1A ... Rotor Core/1Aa ... Inner Peripheral Surface/1B ... Hole Portion/1H ... Transmission Member (Rotor Hub)/1M ... Magnet Member (Magnet)/10 ... Holding Jig/30 ... Resin Injection Device/S3 ... Jig Attachment Step/S4 ... Heating Step/S6 ... Resin Injection Step/S7 ... Resin Curing Step (Magnet Fixing Step)/S9 ... Transmission Member Insertion Step (Rotor Hub Insertion Step)/S10 ... Cooling Step/T3 ... Curing Start Temperature/T5 ... Insertable Temperature (Fixing Temperature)

## Claims

1. A rotor manufacturing method for manufacturing a rotor of a rotating electrical machine, the rotor manufacturing method comprising:
a jig attachment step of attaching a holding jig to a rotor core formed by laminated steel sheets, the holding jig being a member that holds the rotor core by sandwiching the rotor core in a stacking direction of the laminated steel sheets and pressing the rotor core;
a transmission member insertion step of inserting a transmission member into an inner peripheral surface of the rotor core with the rotor core and the holding jig heated to a temperature equal to or higher than an insertable temperature at which the transmission member is able to be inserted into the inner peripheral surface of the rotor core, the transmission member being a member that transmits rotation; and
a cooling step of cooling the rotor core to fix the rotor core and the transmission member together, wherein
the transmission member insertion step is performed with the holding jig kept attached to the rotor core.

2. The rotor manufacturing method according to claim 1, further comprising:
a heating step of heating the rotor core and the holding jig so that a temperature of the rotor core becomes equal to or higher than the insertable temperature that is higher than a curing start temperature of a resin;
a resin injection step of injecting a thermosetting resin into hole portions of the rotor core with magnet members placed therein by a resin injection device after the heating step; and
a resin curing step of maintaining the rotor core at the curing start temperature or higher to cure the resin injected into the hole portions after the resin injection step.

3. The rotor manufacturing method according to claim 2, wherein at least part of the resin curing step and at least part of the transmission member insertion step are performed

4. The rotor manufacturing method according to claim 1, further comprising:
a heating step of heating the rotor core and the holding jig so that a temperature of the rotor core becomes equal to or higher than a curing start temperature of a resin and lower than the insertable temperature;
a resin injection step of injecting a thermosetting resin into hole portions of the rotor core with magnet members placed therein by a resin injection device after the heating step; and
a resin curing step of, after the resin injection step, heating the rotor core and the holding jig so that the temperature of the rotor core becomes equal to or higher than the insertable temperature that is higher than the curing start temperature, and curing the resin injected into the hole portions.

5. The rotor manufacturing method according to claim 4, wherein the transmission member insertion step is performed after the resin curing step.
